# EUROPÄISCHE PATENTSCHRIFT

(11) **EP 4 077 048 B1**
(45) Veröffentlichungstag und Bekanntmachung des Hinweises auf die Patenterteilung: **29.01.2025**
(21) Anmeldenummer: 20816202.4
(22) Anmeldetag: 03.12.2020
(51) Int. Cl.: B60Q 1/34, B60Q 11/00, H05B 45/14, H05B 45/58

(54) **FAHRZEUGSCHEINWERFER UMFASSEND EIN SCHALTUNGSSYSTEM**
VEHICLE HEADLAMP COMPRISING AN ELECTRONIC CIRCUIT SYSTEM
PHARE DE VÉHICULE COMPRENANT UN SYSTÈME DE CIRCUIT

(30) Priorität: 16.12.2019 EP 19216444
(43) Veröffentlichungstag der Anmeldung: 26.10.2022
(73) Patentinhaber: ZKW Group GmbH, 3250 Wieselburg (AT)
(72) Erfinder: GRAF, Harald, Würflach 2732 (AT)
(74) Vertreter: Patentanwaltskanzlei Matschnig & Forsthuber OG
(86) Internationale Anmeldenummer: PCT/EP2020/084443
(87) Internationale Veröffentlichungsnummer: WO 2021/122032

(56) Entgegenhaltungen:
- EP-A1- 2 403 319
- DE-A1- 10 107 578
- DE-A1- 102015 201 739
- US-A- 5 790 017
- US-A1- 2004 208 018
- US-A1- 2012 074 856
- US-B1- 7 276 861

## Beschreibung

Die Erfindung betrifft einen Fahrzeugscheinwerfer gemäß dem Gegenstand des Anspruchs 1.

In den vergangenen Jahrzehnten wurde die Beleuchtungstechnik durch Lichtquellen in Form von Leuchtstofflampen oder Glühlampen dominiert. Glühlampen konnten im Vergleich zu Leuchtstofflampen besonders kompakt gefertigt werden, wodurch diese für den Einsatz in optischen Systemen, in denen eine definierte genau bestimmte Lichtverteilung abgestrahlt werden muss, besonders bevorzugt zum Einsatz kamen. Bei solchen optischen Systemen kann es sich beispielsweise um Fahrzeugscheinwerfer handeln, über die Abblendlichtverteilungen, Fernlichtverteilungen etc. abgestrahlt werden sollen.

Die Versorgung dieser Glühlampen erfolgt bei Fahrzeugen regelmäßig über in einem Stromkreis eingebettete seriell zu den Lampen geschaltete Relais, die durch händisch und/oder automatisiert schaltbare Bedienelemente aktiviert und deaktiviert werden können. Diese Komponenten können Teil eines Lampensteuergerätes sein.

Glühlampen haben eine begrenzte Lebensdauer, die zumeist die Lebensdauer des Produkts, in dem die Glühlampe eingesetzt ist, deutlich unterschreitet. Die Lampen müssen daher regelmäßig getauscht werden. Ein Ausfall einer Glühlampe entsteht typischerweise durch Riss des Leuchtdrahtes, wodurch der Stromfluss durch die Glühlampe unterbrochen wird. Um den Ausfall einer Lampe möglichst rasch zu erkennen, verfügen Lampensteuergeräte oftmals über Mittel zur Stromdetektion, um durch Überwachung des durch die Glühlampe aufgenommenen Stromes auf dessen Funktionstüchtigkeit zurückzuschließen. Unterschreitet der Strom trotz aktiviertem Stromkreis einen vorgebbaren Mindestwert, so wird auf einen Lampenausfall rückgeschlossen und eine Fehlerroutine ausgelöst. Diese etablierte Technik funktioniert daher entsprechend einem digitalen System, in dem nur zwischen zwei Zuständen anhand von deutlich voneinander unterscheidbaren Signalen differenziert wird: Wird bei Aktivierung des Stromkreises ein entsprechend hoher Strom aufgenommen, so wird angenommen, dass die Lampe funktioniert. Wird hingegen kein Strom aufgenommen, so ist die Lampe ausgefallen.

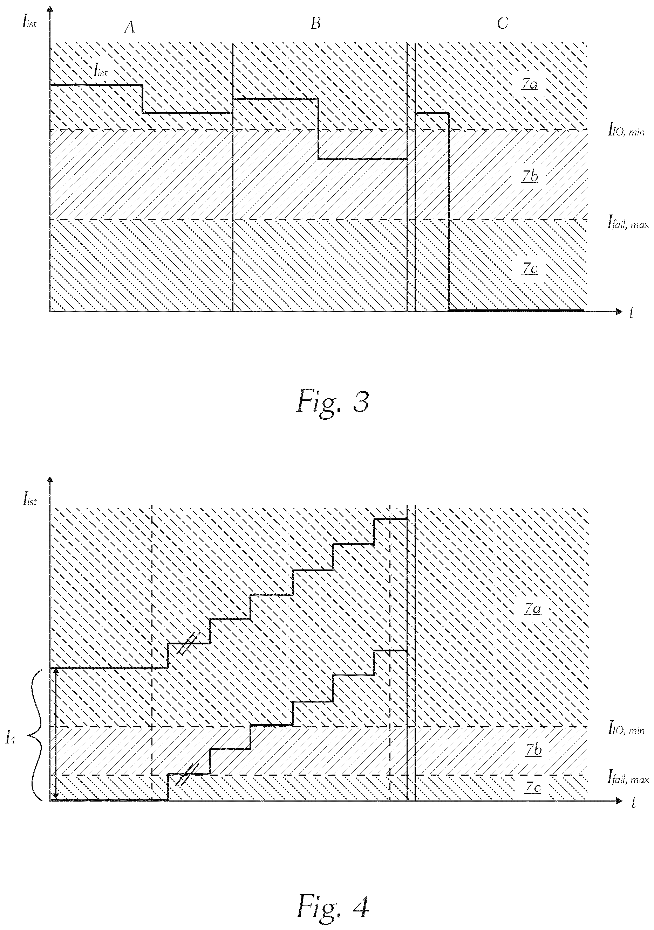

Die Weiterentwicklung von Lichtquellen ausgehend von Glühlampen hin zu noch kompakteren und haltbareren Halbleiterbauelementen hat zur Folge, dass Glühlampen als Lichtquellen in modernen Beleuchtungsvorrichtungen weitgehend verdrängt werden. Typischerweise kann eine Glühlampe durch Einsatz einer frei wählbaren Anzahl an Halbleiterlichtquellen, insbesondere LEDs, ersetzt werden. Zwar weisen diese Bauteile eine deutlich erhöhte Lebensdauer auf, dennoch kann aus diversen Gründen ein Ausfall einzelner Bauteile eintreten. Das bedeutet, dass eine moderne Beleuchtungsvorrichtung, die nun eine Vielzahl an Einzellichtquellen aufweist, typischerweise nicht in ihrer Gesamtheit ausfällt, sondern lediglich einzelne Lichtquellen ausfallen. Es kann daher vorkommen, dass eine moderne Beleuchtungsvorrichtung trotz defekter einzelner LEDs weiterhin aufgrund der verbleibenden funktionierenden LEDs Strom in einer Höhe aufnimmt, der durch ein herkömmliches Lampensteuergerät als normaler Betriebsstrom eingestuft werden würde (siehe z.B. Figur 3, Abschnitt A). Andererseits kann es auch vorkommen, dass die hohe Anzahl einzelner Lichtquellen einer modernen Beleuchtungsvorrichtung auch dazu genutzt wird, Lichteffekte zu erzeugen, die durch gezieltes Ein- und/oder Ausschalten der einzelnen Lichtquellen erzielt werden und somit bereits im Normalbetrieb zu unterschiedlichen Zeitpunkten eine unterschiedliche Stromaufnahme erfolgt.

Die herkömmlichen Lampensteuergeräte (kurz "LCU" für light control unit) werden diesem Umstand nicht gerecht, da diese grundsätzlich ein binäres Betriebsverhalten voraussetzen, um zwischen Funktion und Ausfall unterscheiden zu können. Dokumente US 2012074856 A1 sowie US 7276861 B1 offenbaren Treiberschaltungen für Lichtquellen. Dokument DE 10107578 A1 offenbart eine Lichtanlage für Kraftfahrzeuge. Dokument DE 102015201739 A1 offenbart eine Fahrzeugleuchte umfassend zwei Leuchteinheiten.

Eine Aufgabe der Erfindung besteht daher darin, einen Fahrzeugscheinwerfer umfassend ein Schaltungssystem zu schaffen, mit dem moderne Lichtmodule umfassend eine Anzahl an Lichtquellen versorgt werden können und dabei gleichzeitig die Funktionstüchtigkeit der Lichtquellen überwacht werden kann.

Diese Aufgabe wird mit einem Fahrzeugscheinwerfer gemäß dem Gegenstand des Anspruchs 1 gelöst.

Auf diese Weise ist es möglich, moderne Lichtmodule umfassend eine Anzahl an Lichtquellen in Verbindung mit herkömmlichen Lampensteuergeräten einzusetzen. Dabei kann die Gesamtstromaufnahme der Lichtquellen des Lichtmoduls, die nun nicht lediglich zwischen zwei Zuständen (Ein/AUS) schwanken kann, sondern durch Ein- und Ausschalten der einzelnen Lichtquellen weitere Niveaus aufweisen kann, durch Einsatz des steuerbaren Hilfsmittels ergänzt werden, sodass sich das Lichtmodul hinsichtlich der Fehlererfassung durch das herkömmliche Lampensteuergerät wie ein klassisches "binäres" Glühlampenmodul verhält. Insbesondere kann der Mikrokontroller dazu eingerichtet sein, nicht nur den Betriebszustand der Lichtquellen zu erfassen, sondern darüber hinaus auch den Betriebszustand der Lichtquellen selbst zu steuern.

Das Lampensteuergerät ist zur Abgabe einer Betriebsspannung und eines Betriebsstromes an das Lichtmodul eingerichtet und mit dem Lichtmodul verbunden. Der Mikrokontroller kann während der Zeitdauer, in der kein Eingreifen durch das Hilfsmittel erforderlich ist, in einen Stromsparmodus gesetzt werden. Der Mikrokontroller ist dazu ausgebildet, den Betriebszustand jeder Lichtquelle einzeln zu erfassen und zu überwachen.

Unter dem Ausdruck "eine Anzahl von" wird im Rahmen dieser Offenbarung - sofern nicht anders angegeben - eine Anzahl verstanden, die beispielsweise zwei, drei, vier oder mehr, insbesondere sechs, acht, zehn, zwölf, zwanzig oder mehr als zwanzig betragen kann. Der Fachmann ist in der Lage, die Anzahl der jeweiligen Lichtquellen entsprechend der abzustrahlenden Lichtverteilung und/oder Lichtfunktion zu wählen.

Insbesondere kann vorgesehen sein, dass die Fehlerroutine die Abschaltung des Lichtmoduls und/oder die Ausgabe eines Fehlersignals umfasst.

Weiters kann vorgesehen sein, dass das steuerbare Hilfsmittel dazu eingerichtet ist, bei Abweichen des erfassten Betriebszustandes von einem anhand der Vergleichsinformation abgeleiteten Sollzustandes die Versorgung der elektrischen Lichtquellen abzuschalten, sodass der aufgenommene Strom unter den Lampensteuergerätschwellwert fällt und das Lampensteuergerät auf das Vorhandensein eines Fehlers rückschließt.

Insbesondere kann vorgesehen sein, dass das Hilfsmittel dazu eingerichtet ist, die einzelnen Lichtquellen in ihrer Gesamtheit abzuschalten.

Weiters kann vorgesehen sein, dass das Hilfsmittel dazu eingerichtet ist, eine Stromsenke zuzuschalten. Erfindungsgemäß ist vorgesehen, dass das Hilfsmittel eine Stromsenke umfasst und dass die Stromsenke als elektrischer Verbraucher in Form eines ohmschen Widerstandes, insbesondere eines parallel zu den Lichtquellen geschalteten ohmschen Widerstandes, ausgebildet ist. Auf diese Weise kann die Stromaufnahme des Lichtmoduls auf einfache Weise erhöht werden, wenn z.B. im Zuge eines Lauflichteffekts die Stromaufnahme durch die Lichtquellen niedrig ist.

Insbesondere kann vorgesehen sein, dass die Vergleichsinformation einen Dauerbetriebsschwellwert umfasst, der oberhalb des Lampensteuergerätschwellwerts liegt. Dabei kann vorgesehen sein, dass die Vergleichsinformation eine Repräsentation eines Animationssignals umfasst, das eine Animation in Form einer zeitlichen Abfolge der Einschaltung und/ oder Abschaltung der einzelnen Lichtquellen, insbesondere zur Erzeugung eines Lauflichteffekts, betrifft, wobei daraus der zeitliche Ablauf der Stromaufnahme der Lichtquellen des Lichtmoduls ableitbar ist und das steuerbare Hilfsmittel eine Stromsenke umfasst und dergestalt durch den Mikrokontroller angesteuert ist, dass während des Ablaufes der Animation der Dauerbetriebsschwellwert durch gezielte Zuschaltung der Stromsenke selbst bei animationsbedingter Deaktivierung einzelner Lichtquellen nicht unterschritten wird. Auf diese Weise kann ein herkömmliches "binäres" Lampensteuergerät weiterhin verwendet werden, auch wenn Lichteffekte wie z.B. Lauflichteffekte durch das Lichtmodul umgesetzt werden und die Stromaufnahme durch die Lichtquellen damit fluktuiert. Die Stromsenke kann bis zum Abschluss des Lichteffekts aktiv gehalten werden. Als Weiterbildung kann vorgesehen sein, dass das Lichtmodul eine durch Betätigung eines Fahrtrichtungsanzeiger-Bedienelements aktivierbare Animationsregeleinrichtung umfasst, die den Ablauf einer Animation regelt und hierzu die einzelnen Lichtquellen ansteuert.

Weiters kann vorgesehen sein, dass der Mikrokontroller die aktuelle Stromaufnahme des Lichtmoduls erfasst, und bei Überschreiten eines Wertes, der aus der Summe aus Dauerbetriebsschwellwert und dem durch die Stromsenke aufgenommenen Stromes besteht, ein Wegschalten der Stromsenke veranlasst. Auf diese Weise kann ein überflüssiger Energieverbrauch verhindert werden und ein Einsatz der Stromsenke auf jene Situationen reduziert werden, in denen ein Stromaufnahmeschwellwert trotz ordnungsgemäßem Ablauf einer Animation unterschritten wird.

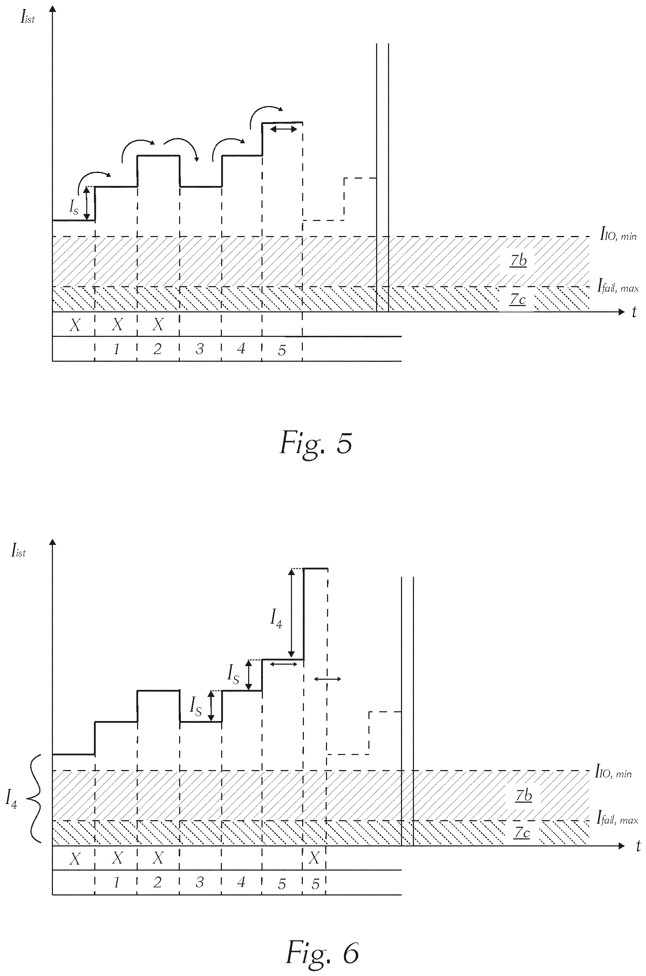

Es könnte vorgesehen sein, dass der Mikrokontroller dazu eingerichtet ist, die Anzahl der Einschalt- und/oder Abschaltmanöver der Lichtquellen zu erfassen (siehe auch Fig. 4 und 5) und dadurch auf das Ende einer Animation rückgeschlossen wird, und/oder die Animationsregeleinrichtung dazu eingerichtet ist, die Stromsenke bei Ende der Animation zu aktivieren und dem Mikrokontroller anhand des dadurch verursachten Stromsprunges das Ende der Animation zu signalisieren, wobei das Lichtmodul sowie das vorgelagerte Lampensteuergerät dergestalt ausgebildet ist, dass die Energieversorgung der Animationsregeleinrichtung bis zum Feststellen des Endes der Animation aufrecht erhalten bleibt.

Auf diese Weise kann eine Klemmensteuerung umgesetzt werden. Hierzu kann die Animationsregeleinrichtung als eigenständiges Modul umfassend die Lichtquellen ausgebildet sein, das wiederum dem Lampenmodul zugeordnet ist. Alternativ dazu kann die Animationsregeleinrichtung ebenso als Teil des Mikrokontrollers ausgebildet sein oder durch diesen angesteuert werden.

Vorzugsweise ist allerdings vorgesehen, dass das Lampensteuergerät ferner zur Erfassung des Vorliegens eines Stromsprunges des Stromes des versorgten Lichtmoduls eingerichtet ist, wobei das Lampensteuergerät weiters dazu eingerichtet ist, den Beginn einer Animation zu erfassen und die Anzahl der Stromsprünge ausgehend von dem Animationsbeginn zu zählen, wobei dem Lampensteuergerät ein Referenzwert zugeführt ist, der die Anzahl der in einer vollständig abgelaufenen Animation enthaltenen Stromsprünge wiedergibt, wobei das Lampensteuergerät ferner dazu eingerichtet ist, aufgrund eines Vergleichs der erfassten Anzahl der Stromsprünge mit dem Referenzwert auf das Ende der Animation rückzuschließen, und vorzugsweise im Anschluss die Stromversorgung des Lichtmoduls zumindest vorübergehend einzustellen. Die vorübergehende Abschaltung kann beispielsweise bis zum Eingang eines Startsignals andauern, mit dem ein erneuter Ablauf einer Animation gestartet werden kann. Manche Animationen laufen typischerweise nur einmal pro Start eines Fahrzeuges ab - z.B. eine "Welcome"-Animation, die den Fahrzeuglenker begrüßt. Andere Animationen können öfter Ablaufen - beispielsweise die Animation eines blinkenden Fahrtrichtungsanzeigers.

Alternativ dazu kann das Lampensteuergerät ferner zur Erfassung der Höhe von Stromsprüngen des Stromes des versorgten Lichtmoduls eingerichtet sein, wobei dem Lampensteuergerät zumindest ein zur Animation korrespondierender die Höhe der zu erwartende Stromsprünge angebender Referenzwert zugeführt ist, wobei das Lampensteuergerät weiters dazu eingerichtet ist, die Höhe jedes Stromsprunges mit dem Referenzwert zu vergleichen und bei Abweichen von dem Referenzwert auf das Ende der Animation rückzuschließen, und im Anschluss die Stromversorgung des Lichtmoduls zumindest vorübergehend einzustellen. Auch hier gilt, dass die Animation mit Eingang eines neuen Startsignals wieder erneut beginnen kann. Besonders günstig kann es dabei sein, wenn die Stromsenke dergestalt gewählt ist, dass der Stromsprung bei Zuschaltung der Stromsenke die doppelte Höhe eines Stromsprungs bei Zuschaltung einer Lichtquelle aufweist. Auf diese Weise wird erreicht, dass bei Zuschalten einer Lichtquelle und gleichzeitigem Wegschalten der Stromsenke hin zu dem Lampensteuergerät ein negativer Stromsprung in Höhe des üblichen Lichtquellenstromes simuliert wird und damit die Stromänderung im Rahmen regulärer Stromsprünge erfolgt und die Stromsenke zum Zwecke der Stromeinsparung während des Ablaufes der Animation deaktiviert werden kann, ohne den Stromsprung von der üblichen Stromsprunghöhe abweichen zu lassen. Ein fehlerhafter Rückschluss auf das Animationsende kann damit verhindert werden.

Weiters kann vorgesehen sein, dass das Lampensteuergerät dazu eingerichtet ist, die Zeitdauer einer Animation zu erfassen, und die Stromversorgung des Lichtmoduls bis Ablauf einer Sollversorgungszeitdauer aufrecht zu erhalten, wobei die Sollversorgungszeitdauer durch den niedrigen Zeitwert gewählt aus den folgenden zwei Zeitwerten festgelegt ist: {zulässige Maximalzeitdauer einer Animation, Zeitdauer bis Animationsende}, wobei im Falle des Überschreitens einer Maximalzeitdauer einer Animation bei gleichzeitigem Nichterreichen des Animationsendes auf einen fehlerhaften Ablauf der Animation rückgeschlossen wird und die Stromversorgung eingestellt wird. Dadurch kann sichergestellt werden, dass bei korrektem Ablauf der Animation die Versorgung bis hin zum Animationsende sichergestellt wird. Die ist z.B. bei der Anwendung bei einem Fahrtrichtungsanzeiger besonders wichtig, der eine gewisse gesetzlich vorgegebene Lichtmenge zumindest für eine bestimmte Zeitdauer abstrahlen muss, wobei das Erreichen dieser Lichtmenge beispielsweise zu Animationsende erfolgen kann. Das zuverlässige Erreichen des Animationsendes kann daher sowohl von technischer als auch gesetzlicher Bedeutung sein.

Bei fehlerhafter Animation - z.B. bei Fernbleiben von Stromsprüngen aufgrund eines Ausfalles einer Lichtquelle - kann hingegen durch Ablauf der Maximalzeitdauer auf das Vorliegen eines Fehlers rückgeschlossen werden und die Versorgung eingestellt werden.

Insbesondere kann vorgesehen sein, dass die Lichtquellen Halbleiterlichtquellen, insbesondere LED-Lichtquellen sind.

Zudem betrifft die Erfindung einen Fahrzeugscheinwerfer, insbesondere einen Kraftfahrzeugscheinwerfer, umfassend eine erfindungsgemäße Beleuchtungs- oder Signalisierungsvorrichtung.

Die Erfindung ist im Folgenden anhand beispielhafter und nicht einschränkender Ausführungsformen näher erläutert, die in den Figuren veranschaulicht sind. Darin zeigt
Figur 1 eine schematische Darstellung eines Schaltungssystems,
Figur 2 eine schematische Darstellung des Betriebsverhaltens eines herkömmlichen Lichtmoduls,
Figur 3 eine schematische Darstellung der Stromaufnahme von Lichtquellen eines modernen Lichtmoduls bei Ausfall zumindest einer Lichtquelle,
Figur 4 den zeitlichen Verlauf der Stromaufnahme von Lichtquellen eines modernen Lichtmoduls bei der Umsetzung eines Lauflichteffekts,
Figur 5 eine beispielhafte Darstellung über die Erfassung einer Animation, und
Figur 6 eine beispielhafte Darstellung zu einer alternativen Möglichkeit zur Erfassung einer Animation.

In den folgenden Figuren bezeichnen - sofern nicht anders angegeben - gleiche Bezugszeichen gleiche Merkmale.

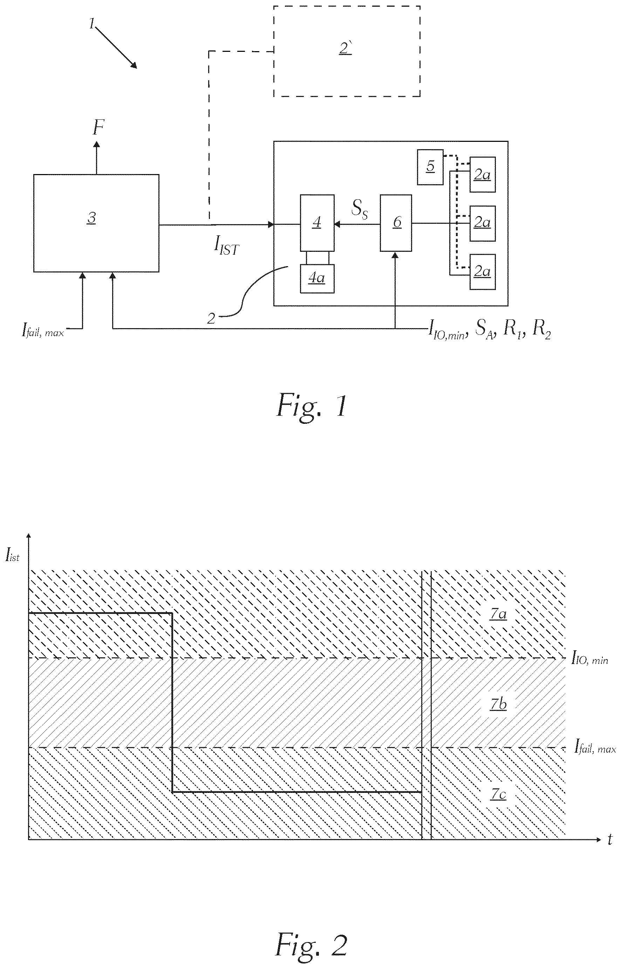

Figur 1 zeigt eine schematische Darstellung eines Schaltungssystems 1.

Das Schaltungssystem 1 umfasst ein Lichtmodul 2 zur Abstrahlung einer Lichtverteilung sowie ein Lampensteuergerät 3 zur elektrischen Versorgung und zur Überwachung der Funktionstüchtigkeit des Lichtmoduls 2. Bei dem Lampensteuergerät 3 kann es sich um ein handelsübliches Lampensteuergerät handeln, bei dem zur Überwachung der Funktionstüchtigkeit des Lichtmoduls 2 der im Betriebszustand durch das Lichtmodul 2 aufgenommene Strom Iᵢₛₜ erfasst und mit einem Lampensteuergerätschwellwert I_{fail,max} verglichen wird (siehe Fig. 2). Das Lampensteuergerät 3 ist dabei dazu eingerichtet, bei Unterschreiten des Lampensteuergerätschwellwertes I_{fail,max} auf das Vorhandensein eines Fehlers rückzuschließen und eine Fehlerroutine F auszulösen.

In Figur 1 ist zudem ein Lichtmodul 2' mit strichlierten Linien dargestellt, das ein herkömmliches Lichtmodul umfassend eine Glühlampe repräsentiert. Ein solches Lichtmodul 2' kann aufgrund des binären Betriebsverhaltens von Glühlampen (hohe Stromaufnahme bei Normalbetrieb, Ausfall der Stromaufnahme bei Ausfall der Lampe) auf einfache Weise durch das Lampensteuergerät 3 durch Vergleich mit einem geeignet gewählten Schwellwert erfasst werden. Dieses Lichtmodul 2' ist nur beispielhaft dargestellt und nicht Gegenstand der Erfindung bzw. des erfindungsgemäßen Schaltungssystems 1.

Das Lichtmodul 2 des Schaltungssystems 1 ist - wie nachfolgend noch erörtert wird - allerdings dazu eingerichtet, sich hinsichtlich seiner Stromaufnahme trotz Verwendung mehrerer Lichtquellen im Fehlerfall analog wie eine herkömmliches Lichtmodul 2' zu verhalten und damit durch das Lampensteuergerät 3 angesteuert und überwacht werden zu können. Das Lichtmodul 2 weist eine Anzahl an einzeln elektrisch versorgbaren Lichtquellen 2a, einen Mikrokontroller 6 zur Erfassung des Betriebszustands der einzelnen Lichtquellen 2a, sowie zumindest ein steuerbares Hilfsmittel 4 zur Manipulation der Stromaufnahme des Lichtmoduls 2 auf.

Dem Mikrokontroller 6 ist zumindest eine vorgebbare Vergleichsinformation zugeführt, z.B. in Form eines Schwellwertes I_{IO,min}, oder eines Repräsentationssignals S_{A}, wobei auf die Vergleichsinformation nachfolgend noch näher eingegangen wird. Der Mikrokontroller 6 ist dazu eingerichtet, durch Vergleich des erfassten Betriebszustandes der einzelnen Lichtquellen 2a mit der Vergleichsinformation I_{IO,min} und/oder S_{A} ein Steuersignal Ss auszugeben, wobei das Steuersignal Ss dem steuerbaren Hilfsmittel 4 zu dessen Steuerung zugeführt ist und das steuerbare Hilfsmittel 4 in Abhängigkeit davon die Stromaufnahme des Lichtmoduls 2 manipuliert.

Das steuerbare Hilfsmittel 4 ist dazu eingerichtet, bei Abweichen des erfassten Betriebszustandes von einem anhand der Vergleichsinformation (beispielsweise eines Dauerbetriebsschwellwert I_{IO,min} oder des Signals S_{A}) abgeleiteten Sollzustandes die Versorgung der elektrischen Lichtquellen 2a abzuschalten, sodass der aufgenommene Strom Iᵢₛₜ unter den Lampensteuergerätschwellwert I_{fail,max} fällt und das Lampensteuergerät 3 auf das Vorhandensein eines Fehlers rückschließt. In den Figuren wurde der Wertebereich, der oberhalb I_{IO,min} liegt, mit dem Bezugszeichen 7a, der Bereich der zwischen I_{IO,min} und I_{fail,max} liegt, mit dem Bezugszeichen 7b und der Bereich, der unterhalb I_{fail,max} liegt, mit dem Bezugszeichen 7c bezeichnet.

Das Hilfsmittel 4 ist dazu eingerichtet, eine Stromsenke 4a in Form eines Parallelwiderstandes zuzuschalten. Auch kann das Hilfsmittel 4 dazu eingerichtet sein, ein zu den Lichtquellen seriell liegenden Schalter zu aktivierten, um damit die Abschaltung sämtlicher Lichtquellen zu erzwingen.

Ergänzend oder alternativ zu dem Vergleich mit dem Dauerbetriebsschwellwert I_{IO,min} kann die Vergleichsinformation eine Repräsentation eines Animationssignals S_{A} umfassen. Die Animation betrifft dabei eine zeitliche Abfolge der Einschaltung und/oder Abschaltung der einzelnen Lichtquellen 2a, beispielweise zur Erzeugung eines Lauflichteffekts eines Fahrtrichtungsanzeigers. Daraus kann wiederum der zeitliche Ablauf der Stromaufnahme der Lichtquellen 2a des Lichtmoduls 2 abgeleitet werden. Für die Zeitdauer, in der die Stromaufnahme unterhalb des Dauerbetriebsschwellwerts I_{IO,min} liegt, kann das Hilfsmittel 4 die Stromsenke 4a zuschalten, sodass die Gesamtstromaufnahme des Lichtmoduls 2 selbst bei animationsbedingter Deaktivierung einzelner Lichtquellen 2a nicht unterhalb des Dauerbetriebsschwellwerts I_{IO,min} liegt.

Zudem kann vorgesehen sein, dass das Lichtmodul 2 eine durch Betätigung eines Fahrtrichtungsanzeiger-Bedienelements aktivierbare Animationsregeleinrichtung 5 umfasst, die den Ablauf einer Animation regelt und hierzu die einzelnen Lichtquellen 2a ansteuert.

Die Erfindung wird nun mit Blick auf die Figuren 2 bis 5 nochmals im Detail erörtert. Figur 2 zeigt eine schematische Darstellung des Betriebsverhaltens eines herkömmlichen Lichtmoduls, dass das bereits erwähnte binäre Funktionsverhalten aufweist. Figur 3 zeigt hingegen das Betriebsverhalten eines modernen Lichtmoduls umfassend eine Mehrzahl an Lichtquellen in unterschiedlichen Szenarien. In Variante A ist ein Szenario gezeigt, in dem eine einzelne Lichtquelle ausfällt und die Stromaufnahme sinkt, allerdings weiterhin oberhalb des Dauerbetriebsschwellwerts I_{IO,min} liegt. In diesem Fall würde weder durch das Lampensteuergerät noch durch Vergleich mit dem Dauerbetriebsschwellwert I_{IO,min} ein Fehler erkannt, da der Strom weiterhin oberhalb der entsprechenden Grenzen I_{IO,min} sowie I_{fail,max} liegt. Durch die Einzelerfassung des Betriebszustandes der Lichtquellen 2a mittels dem Mikrokontroller 6 kann dieser Fehler allerdings erkannt werden. Ähnliches gilt in Szenario B, in dem der Ausfall einer Lichtquelle 2a zu einer Stromabnahme führt, die zu einem Betriebsstrom Iᵢₛₜ unterhalb des Wertes von I_{IO,min} führt. Dieser Fehler wird durch den Mikrokontroller 6 ebenso erkannt. Szenario C zeigt in weiterer Folge das Eingreifen des Mikrokontrollers 6, durch das der Fehler auch durch das Lampensteuergerät 3 erkennbar gemacht wird. Der Kontroller 6 schaltet hierzu die verbleibenden Lichtquellen 2a ab und erzwingt damit ein Unterschreiten des Stromes I_{Ist} von der Grenze I_{fail,max}. Dieses Unterschreiten wird durch das Lampensteuergerät 3 detektiert und es kann eine übliche Fehlerroutine F ausgelöst werden.

Figur 4 zeigt ein Szenario, bei dem durch aufeinanderfolgendes Einschalten der Lichtquellen 2a ein Lauflichteffekt erzielt wird. Der Strom Iᵢₛₜ steigt entsprechend der Abfolge der Einschaltvorgänge gestuft an, wobei der Strom Iᵢₛₜ anfangs unterhalb des Schwellwertes I_{fail,max} liegt. Damit würde das Lampensteuergerät 3 eigentlich einen Fehler erkennen, obwohl das Lichtmodul 2 ordnungsgemäß funktioniert. Dies kann vermieden werden, indem durch Zuschaltung einer Stromsenke mittels des Hilfsmittels 4 ein zusätzlicher Strom I₄ durch das Lichtmodul 2 aufgenommen wird, wodurch der Strom selbst bei animationsbedingter Abschaltung einzelner Lichtquellen 2a oberhalb der Grenze I_{IO,min} liegt. Sofern die Gesamtstromaufnahme des Lichtmoduls 2 den doppelten Wert von I₄ überschreitet, kann die Stromsenke auch wieder deaktiviert werden.

Figur 5 zeigt eine beispielhafte Darstellung über die Erfassung einer Animation. Dabei werden, z.B. durch das Lampensteuergerät 3, die Stromsprünge erfasst, wodurch auf das Fortschreiten der Animation rückgeschlossen werden kann. Diese Erfassung kann mit dem die Animation repräsentierenden Signal S_{A} bzw. einem daraus abgeleiteten in Figur 1 dargestellten Referenzwert R₁ verglichen und ausgewertet werden. Durch die Kreuze X sind jene Zeitbereiche gekennzeichnet, in denen die Stromsenke X zugeschaltet ist. Anders ausgedrückt zeigt Figur 5 eine Variante der Erfindung, in der das Lampensteuergerät 3 ferner zur Erfassung des Vorliegens eines Stromsprunges Iₛ des Stromes Iᵢₛₜ des versorgten Lichtmoduls 2 eingerichtet ist, wobei das Lampensteuergerät 3 weiters dazu eingerichtet ist, den Beginn einer Animation zu erfassen und die Anzahl der Stromsprünge Iₛ ausgehend von dem Animationsbeginn zu zählen, wobei dem Lampensteuergerät 3 ein Referenzwert R₁ zugeführt ist, der die Anzahl der in einer vollständig abgelaufenen Animation enthaltenen Stromsprünge Iₛ wiedergibt, wobei das Lampensteuergerät 3 ferner dazu eingerichtet ist, aufgrund eines Vergleichs der erfassten Anzahl der Stromsprünge Iₛ mit dem Referenzwert R₁ auf das Ende der Animation rückzuschließen, und vorzugsweise im Anschluss die Stromversorgung des Lichtmoduls 2 zumindest vorübergehend einzustellen. In der Zeile unterhalb jener Zeile, die die "X" Symbole enthält, ist die zum jeweiligen Zeitpunkt eingeschaltete Anzahl an LED-Lichtquellen angegeben. Selbige Notation gilt auch bei Fig. 6.

Figur 6 zeigt eine beispielhafte Darstellung zu einer alternativen Möglichkeit zur Erfassung einer Animation. Darin ist das Lampensteuergerät 3 ferner zur Erfassung der Höhe von Stromsprüngen Iₛ des Stromes Iᵢₛₜ des versorgten Lichtmoduls 2 eingerichtet, wobei dem Lampensteuergerät 3 zumindest ein zur Animation korrespondierender die Höhe der zu erwartende Stromsprünge Iₛ angebender Referenzwert R₂ zugeführt ist, wobei das Lampensteuergerät 3 weiters dazu eingerichtet ist, die Höhe jedes Stromsprunges Iₛ mit dem Referenzwert R₂ zu vergleichen und bei Abweichen von dem Referenzwert R₂ auf das Ende der Animation rückzuschließen, und im Anschluss die Stromversorgung des Lichtmoduls 2 zumindest vorübergehend einzustellen. Die Stromsenke 4a kann dergestalt gewählt sein, dass der Stromsprung I₄ bei Zuschaltung der Stromsenke 4a die doppelte Höhe eines Stromsprungs Iₛ bei Zuschaltung einer Lichtquelle 2a aufweist, sodass bei Zuschalten einer Lichtquelle 2a und gleichzeitigem Wegschalten der Stromsenke 4a hin zu dem Lampensteuergerät 3 ein negativer Stromsprung Iₛ in Höhe des üblichen Lichtquellenstromes simuliert wird.

Ganz allgemein kann vorgesehen sein, dass das Lampensteuergerät 3 weiters dazu eingerichtet ist, die Zeitdauer einer Animation zu erfassen, und die Stromversorgung des Lichtmoduls 2 bis Ablauf einer Sollversorgungszeitdauer aufrecht zu erhalten, wobei die Sollversorgungszeitdauer durch den niedrigen Zeitwert gewählt aus den folgenden zwei Zeitwerten festgelegt ist: {zulässige Maximalzeitdauer einer Animation; Zeitdauer bis Animationsende}, wobei im Falle des bei Überschreiten einer Maximalzeitdauer einer Animation bei gleichzeitigem Nichterreichen des Animationsendes auf einen fehlerhaften Ablauf der Animation rückgeschlossen wird und die Stromversorgung eingestellt wird.

Sowohl in Figur 5 als auch in Figur 6 kann das Effektende durch einen höheren Sprung des Stromwertes signalisiert werden, der z.B. durch Zuschaltung des Stromes I₄ der Stromsenke 4a umgesetzt werden kann.

Etwaige Bezugszeichen in den Ansprüchen sind beispielhaft und dienen nur der einfacheren Lesbarkeit der Ansprüche, ohne diese einzuschränken.

## Patentansprüche

1. Fahrzeugscheinwerfer, insbesondere Kraftfahrzeugscheinwerfer, umfassend eine Beleuchtungs- oder Signalisierungsvorrichtung, wobei die Beleuchtungs- oder Signalisierungsvorrichtung ein Schaltungssystem (1) umfasst, das Schaltungssystem (1), umfassend
- ein Lichtmodul (2), insbesondere ein Fahrzeuglichtmodul, zur Abstrahlung einer Lichtverteilung,
- ein Lampensteuergerät (3) zur elektrischen Versorgung und zur Überwachung der Funktionstüchtigkeit des Lichtmoduls (2), wobei das Lampensteuergerät (3) zur Überwachung der Funktionstüchtigkeit des Lichtmoduls (2) einen im Betriebszustand durch das Lichtmodul (2) aufgenommenen Strom (Iᵢₛₜ) erfasst und mit einem Lampensteuergerätschwellwert (I_{fail,max}) vergleicht, wobei das Lampensteuergerät (3) dazu eingerichtet ist bei Unterschreiten des Lampensteuergerätschwellwertes (I_{fail,max}) auf das Vorhandensein eines Fehlers rückzuschließen und eine Fehlerroutine (F) auszulösen,
**dadurch gekennzeichnet, dass** das Lichtmodul (2)
- eine Anzahl an einzeln elektrisch versorgbaren Lichtquellen (2a),
- einen Mikrokontroller (6) zur Erfassung des Betriebszustands jeder einzelnen Lichtquelle (2a), sowie
- zumindest ein steuerbares Hilfsmittel (4) zur Manipulation der Stromaufnahme des Lichtmoduls (2) aufweist, wobei das Hilfsmittel (4) eine Stromsenke (4a) umfasst, wobei die Stromsenke (4a) als elektrischer Verbraucher in Form eines ohmschen Widerstandes, insbesondere eines parallel zu den Lichtquellen (2a) geschalteten ohmschen Widerstandes, ausgebildet ist,
wobei dem Mikrokontroller (6) zumindest eine vorgebbare Vergleichsinformation (I_{IO,min}, S_{A}) zugeführt ist und der Mikrokontroller (6) dazu eingerichtet ist, durch Vergleich des erfassten Betriebszustandes der einzelnen Lichtquellen (2a) mit der Vergleichsinformation (I_{IO,min}, S_{A}) ein Steuersignal (Ss) auszugeben, wobei das Steuersignal (Ss) dem steuerbaren Hilfsmittel (4) zu dessen Steuerung zugeführt ist und das steuerbare Hilfsmittel (4) in Abhängigkeit davon die Stromaufnahme des Lichtmoduls (2) manipuliert, wobei das Hilfsmittel (4) dazu eingerichtet ist, die Stromsenke (4a) zuzuschalten.

2. Fahrzeugscheinwerfer nach Anspruch 1, wobei die Fehlerroutine (F) die Abschaltung des Lichtmoduls (2) und/oder die Ausgabe eines Fehlersignals umfasst.

3. Fahrzeugscheinwerfer nach Anspruch 1 oder 2, wobei das steuerbare Hilfsmittel (4) dazu eingerichtet ist, bei Abweichen des erfassten Betriebszustandes von einem anhand der Vergleichsinformation (I_{IO,min}, S_{A}) abgeleiteten Sollzustandes die Versorgung der elektrischen Lichtquellen (2a) abzuschalten, sodass der aufgenommene Strom Iᵢₛₜ unter den Lampensteuergerätschwellwert (I_{fail,max}) fällt und das Lampensteuergerät (3) auf das Vorhandensein eines Fehlers rückschließt.

4. Fahrzeugscheinwerfer nach einem der vorhergehenden Ansprüche, wobei das Hilfsmittel (4) dazu eingerichtet ist, die einzelnen Lichtquellen (2a) in ihrer Gesamtheit abzuschalten.

5. Fahrzeugscheinwerfer nach einem der vorhergehenden Ansprüche, wobei die Vergleichsinformation einen Dauerbetriebsschwellwert (I_{IO,min}) umfasst, der oberhalb des Lampensteuergerätschwellwerts (I_{fail,max}) liegt.

6. Fahrzeugscheinwerfer nach Anspruch 5, wobei die Vergleichsinformation (I_{IO,min}, S_{A}) eine Repräsentation eines Animationssignals (S_{A}) umfasst, das eine Animation in Form einer zeitlichen Abfolge der Einschaltung und/oder Abschaltung der einzelnen Lichtquellen (2a), insbesondere zur Erzeugung eines Lauflichteffekts, betrifft, wobei daraus ein zeitlicher Ablauf der Stromaufnahme der Lichtquellen (2a) des Lichtmoduls (2) ableitbar ist und das steuerbare Hilfsmittel (4) dergestalt durch den Mikrokontroller (6) angesteuert ist, dass während eines Ablaufes der Animation der Dauerbetriebsschwellwert (I_{IO,min}) durch gezielte Zuschaltung der Stromsenke (4a) selbst bei animationsbedingter Deaktivierung einzelner Lichtquellen (2a) nicht unterschritten wird.

7. Fahrzeugscheinwerfer nach Anspruch 6, wobei der Mikrokontroller (6) eine aktuelle Stromaufnahme (Iist) des Lichtmoduls (2) erfasst, und bei Überschreiten eines Wertes, der aus der Summe aus Dauerbetriebsschwellwert (I_{IO,min}) und dem durch die Stromsenke aufgenommenen Stromes (I₄) besteht, ein Wegschalten der Stromsenke (4a) veranlasst.

8. Fahrzeugscheinwerfer nach Anspruch 6 oder 7, wobei das Lichtmodul (2) eine durch Betätigung eines Fahrtrichtungsanzeiger-Bedienelements aktivierbare Animationsregeleinrichtung (5) umfasst, die den Ablauf einer Animation regelt und hierzu die einzelnen Lichtquellen (2a) ansteuert.

9. Fahrzeugscheinwerfer nach einem der Ansprüche 6 bis 8, wobei das Lampensteuergerät (3) ferner zur Erfassung des Vorliegens eines Stromsprunges (Iₛ) des Stromes (Iᵢₛₜ) eines versorgten Lichtmoduls (2) eingerichtet ist, wobei das Lampensteuergerät (3) weiters dazu eingerichtet ist, den Beginn einer Animation zu erfassen und die Anzahl der Stromsprünge (Iₛ) ausgehend von dem Animationsbeginn zu zählen, wobei dem Lampensteuergerät (3) ein Referenzwert (R₁) zugeführt ist, der die Anzahl der in einer vollständig abgelaufenen Animation enthaltenen Stromsprünge (Iₛ) wiedergibt, wobei das Lampensteuergerät (3) ferner dazu eingerichtet ist, aufgrund eines Vergleichs der erfassten Anzahl der Stromsprünge (Iₛ) mit dem Referenzwert (R₁) auf das Ende der Animation rückzuschließen, und vorzugsweise im Anschluss eine Stromversorgung des Lichtmoduls (2) zumindest vorübergehend einzustellen.

10. Fahrzeugscheinwerfer nach Anspruch 9, wobei das Lampensteuergerät (3) weiters dazu eingerichtet ist, die Zeitdauer einer Animation zu erfassen, und eine Stromversorgung des Lichtmoduls (2) bis Ablauf einer Sollversorgungszeitdauer aufrecht zu erhalten, wobei die Sollversorgungszeitdauer durch einen niedrigen Zeitwert gewählt aus den folgenden zwei Zeitwerten festgelegt ist: {zulässige Maximalzeitdauer einer Animation, Zeitdauer bis Animationsende}, wobei im Falle des bei Überschreiten einer Maximalzeitdauer einer Animation bei gleichzeitigem Nichterreichen des Animationsendes auf einen fehlerhaften Ablauf der Animation rückgeschlossen wird und die Stromversorgung eingestellt wird.

11. Fahrzeugscheinwerfer nach einem der vorhergehenden Ansprüche, wobei die Lichtquellen (2a) Halbleiterlichtquellen, insbesondere LED-Lichtquellen (2a) sind.

12. Fahrzeug, insbesondere Kraftfahrzeug, umfassend einen Fahrzeugscheinwerfer nach einem der vorhergehenden Ansprüche.

## Claims

1. Vehicle headlamp, in particular motor vehicle headlamp, comprising an illumination or signaling device, the illumination or signaling device comprising a circuit system (1), the circuit system (1) comprising
- a light module (2), in particular a vehicle light module, for emitting a light distribution,
- a lamp control unit (3) for the electrical supply and for monitoring the functionality of the light module (2), wherein the lamp control unit (3), for monitoring the functionality of the light module (2), detects a current (Iᵢₛₜ) drawn by the light module (2) in the operating state and compares it with a lamp control unit threshold value (I_{fail,max}), the lamp control unit (3) being set up to infer the presence of a fault and to trigger a fault routine (F) if the current falls below the lamp control unit threshold value (I_{fail,max}),
**characterized in that** the light module (2) comprises
- a number of individually electrically suppliable light sources (2a),
- a microcontroller (6) for detecting the operating state of each individual light source (2a), and
- at least one controllable auxiliary means (4) for manipulating the current consumption of the light module (2), the auxiliary means (4) comprising a current sink (4a), the current sink (4a) being designed as an electrical load in the form of an ohmic resistor, in particular an ohmic resistor connected in parallel with the light sources (2a),
wherein the microcontroller (6) is supplied with at least one predeterminable comparison information item (I_{IO,min}, S_{A}) and the microcontroller (6) is set up to output a control signal (Ss) by comparing the detected operating state of the individual light sources (2a) with the comparison information item (I_{IO,min}, S_{A}), wherein the control signal (Ss) is supplied to the controllable auxiliary means (4) for controlling it and the controllable auxiliary means (4) manipulates the current consumption of the light module (2) as a function thereof, wherein the auxiliary means (4) is configured to switch on the current sink (4a).

2. Vehicle headlamp according to claim 1, wherein the error routine (F) comprises switching off the light module (2) and/or outputting an error signal.

3. Vehicle headlamp according to claim 1 or 2, wherein the controllable auxiliary means (4) is configured to switch off the supply to the electrical light sources (2a) if the detected operating state deviates from a target state derived on the basis of the comparison information (I_{IO,min}, S_{A}), so that the current Iᵢₛₜ drawn falls below the lamp control unit threshold value (I_{fail,max}) and the lamp control unit (3) concludes that a fault is present.

4. Vehicle headlamp according to any of the preceding claims, wherein the auxiliary means (4) is arranged to switch off the individual light sources (2a) in their entirety.

5. Vehicle headlamp according to any of the preceding claims, wherein the comparison information comprises a continuous operation threshold value (I_{IO,min}) which is above the lamp control unit threshold value (I_{fail,max}).

6. Vehicle headlamp according to claim 5, wherein the comparison information (I_{IO,min}, S_{A}) comprises a representation of an animation signal (S_{A}) relating to an animation in the form of a time sequence of switching on and/or switching off the individual light sources (2a), in particular for generating a running light effect, wherein a time sequence of the current consumption of the light sources (2a) of the light module (2) can be derived therefrom and the controllable auxiliary means (4) is controlled by the microcontroller (6) in such a way that during a sequence of the animation the continuous operation threshold value (I_{IO,min}) is not undershot by selectively switching on the current sink (4a) even when individual light sources (2a) are deactivated as a result of the animation.

7. Vehicle headlamp according to claim 6, wherein the microcontroller (6) detects a current current consumption (Iᵢₛₜ) of the light module (2) and, if a value is exceeded which consists of the sum of the continuous operation threshold value (I_{IO,min}) and the current (I₄) consumed by the current sink, causes the current sink (4a) to be switched off.

8. Vehicle headlamp according to claim 6 or 7, wherein the light module (2) comprises an animation control device (5) activatable by actuating a direction indicator control element which regulates the sequence of an animation and controls the individual light sources (2a) for this purpose.

9. Vehicle headlamp according to any of claims 6 to 8, wherein the lamp control unit (3) is furthermore configured to detect the presence of a current jump (Iₛ) of the current (Iᵢₛₜ) of a supplied light module (2), wherein the lamp control unit (3) is furthermore configured to detect the start of an animation and to count the number of current jumps (Iₛ) starting from the start of the animation, wherein a reference value (R₁) is supplied to the lamp control unit (3), which reflects the number of current jumps (Iₛ) contained in a completely elapsed animation, wherein the lamp control unit (3) is furthermore configured to infer the end of the animation on the basis of a comparison of the detected number of current jumps (Iₛ) with the reference value (R₁), and preferably subsequently to at least temporarily adjust a power supply to the light module (2).

10. Vehicle headlamp according to claim 9, wherein the lamp control unit (3) is furthermore configured to detect the duration of an animation and to maintain a power supply to the light module (2) until the expiry of a target supply duration, wherein the target supply duration is defined by a low time value selected from the following two time values: {permissible maximum time duration of an animation, time duration until end of animation} , whereby in the event that a maximum time duration of an animation is exceeded and the end of the animation is not reached at the same time, a faulty sequence of the animation is inferred and the power supply is stopped.

11. Vehicle headlamp according to any of the preceding claims, wherein the light sources (2a) are semiconductor light sources, in particular LED light sources (2a).

12. Vehicle, in particular motor vehicle, comprising a vehicle headlamp according to any of the preceding claims.

## Revendications

1. Projecteur de véhicule, en particulier projecteur de véhicule automobile, comprenant un dispositif d'éclairage ou de signalisation, le dispositif d'éclairage ou de signalisation comprenant un système de commutation (1), le système de commutation (1) comprenant
- un module d'éclairage (2), en particulier un module d'éclairage de véhicule, pour émettre une distribution de lumière,
- un appareil de commande de lampe (3) pour l'alimentation électrique et pour la surveillance du bon fonctionnement du module d'éclairage (2), l'appareil de commande de lampe (3) détectant, pour la surveillance du bon fonctionnement du module d'éclairage (2), un courant (Iᵢₛₜ) absorbé par le module d'éclairage (2) à l'état de fonctionnement et le comparant à une valeur seuil d'appareil de commande de lampe (I_{fail,max}), l'appareil de commande de lampe (3) étant conçu pour déduire la présence d'un défaut lorsque la valeur seuil de l'appareil de commande de lampe (I_{fail,max}) n'est pas atteinte et pour déclencher une routine de défaut (F),
**caractérisé en ce que** le module d'éclairage (2) comprend
- un certain nombre de sources lumineuses (2a) pouvant être alimentées électriquement individuellement,
- un microcontrôleur (6) pour détecter l'état de fonctionnement de chaque source lumineuse (2a), ainsi que
- au moins un moyen auxiliaire (4) pouvant être commandé pour manipuler la consommation de courant du module d'éclairage (2), le moyen auxiliaire (4) comprenant un puits de courant (4a), le puits de courant (4a) étant conçu comme un consommateur électrique sous la forme d'une résistance ohmique, en particulier d'une résistance ohmique montée en parallèle avec les sources lumineuses (2a),
au moins une information de comparaison (I_{IO,min}, S_{A}) pouvant être prédéfinie étant amenée au microcontrôleur (6) et le microcontrôleur (6) étant conçu pour émettre un signal de commande (Ss) par comparaison de l'état de fonctionnement détecté des différentes sources lumineuses (2a) avec l'information de comparaison (I_{IO,min}, S_{A}), le signal de commande (Ss) étant amené au moyen auxiliaire (4) pour sa commande et le moyen auxiliaire (4) manipulant en fonction de celui-ci la consommation de courant du module d'éclairage (2), le moyen auxiliaire (4) étant conçu pour mettre en circuit le puits de courant (4a).

2. Projecteur de véhicule selon la revendication 1, dans lequel la routine d'erreur (F) comprend la coupure du module d'éclairage (2) et/ou l'émission d'un signal d'erreur.

3. Projecteur de véhicule selon la revendication 1 ou 2, dans lequel le moyen auxiliaire (4) est agencé pour couper l'alimentation des sources lumineuses électriques (2a) lorsque l'état de fonctionnement détecté s'écarte d'un état de consigne déduit à l'aide de l'information de comparaison (I_{IO,min}, S_{A}), de sorte que le courant absorbé Iᵢₛₜ tombe en dessous de la valeur seuil de l'appareil de commande de lampe (I_{fail,max}) et que l'appareil de commande de lampe (3) conclut à la présence d'un défaut.

4. Projecteur de véhicule selon l'une quelconque des revendications précédentes, dans lequel moyen auxiliaire (4) est agencé pour éteindre les différentes sources lumineuses (2a) dans leur ensemble.

5. Projecteur de véhicule selon l'une quelconque des revendications précédentes, dans lequel l'information de comparaison comprend une valeur de seuil de fonctionnement continu (I_{IO,min}) supérieure à la valeur de seuil de l'appareil de commande de lampe (I_{fail,max}).

6. Projecteur de véhicule selon la revendication 5, dans lequel l'information de comparaison (I_{IO,min}, S_{A}) comprend une représentation d'un signal d'animation (S_{A}) concernant une animation sous forme d'une séquence temporelle d'allumage et/ou d'extinction des différentes sources lumineuses (2a), notamment pour produire un effet de chenillard, un déroulement temporel de la consommation de courant des sources lumineuses (2a) du module d'éclairage (2) pouvant en être déduit et le moyen auxiliaire (4) étant commandé par le microcontrôleur (6) de telle sorte que, pendant un déroulement de l'animation, la valeur seuil de fonctionnement permanent (I_{IO,min}) ne soit pas dépassée vers le bas par une mise en circuit ciblée du puits de courant (4a), même en cas de désactivation de sources lumineuses individuelles (2a) en raison de l'animation.

7. Projecteur de véhicule selon la revendication 6, dans lequel le microcontrôleur (6) détecte une consommation de courant actuelle (Iᵢₛₜ) du module d'éclairage (2) et, en cas de dépassement d'une valeur qui est constituée par la somme de la valeur seuil de fonctionnement permanent (I_{IO,min}) et du courant (I₄) absorbé par le puits de courant, provoque une désactivation du puits de courant (4a).

8. Projecteur de véhicule selon la revendication 6 ou 7, dans lequel le module d'éclairage (2) comprend un dispositif de régulation d'animation (5) pouvant être activé par l'actionnement d'un élément de commande de l'indicateur de direction, qui régule le déroulement d'une animation et commande à cet effet les différentes sources lumineuses (2a).

9. Projecteur de véhicule selon l'une des revendications 6 à 8, dans lequel l'appareil de commande de lampe (3) est en outre agencé pour détecter la présence d'un saut de courant (Iₛ) du courant (Iᵢₛₜ) d'un module d'éclairage (2) alimenté, dans lequel l'appareil de commande de lampe (3) est en outre agencé pour détecter le début d'une animation et pour compter le nombre de sauts de courant (Iₛ) à partir du début de l'animation, une valeur de référence (R₁) étant amenée à l'appareil de commande de lampe (3), qui reproduit le nombre de sauts de courant (Iₛ) contenus dans une animation qui s'est entièrement déroulée, l'appareil de commande de lampe (3) étant en outre conçu pour déduire la fin de l'animation sur la base d'une comparaison du nombre saisi de sauts de courant (Iₛ) avec la valeur de référence (R₁), et de préférence pour arrêter ensuite au moins temporairement une alimentation en courant du module d'éclairage (2).

10. Projecteur de véhicule selon la revendication 9, dans lequel l'appareil de commande de lampe (3) est en outre conçu pour détecter la durée d'une animation et pour maintenir une alimentation électrique du module d'éclairage (2) jusqu'à l'expiration d'une durée d'alimentation de consigne, la durée d'alimentation de consigne étant déterminée par une valeur de temps basse choisie parmi les deux valeurs de temps suivantes : {durée maximale admissible d'une animation, durée jusqu'à la fin de l'animation}, dans le cas où, en cas de dépassement d'une durée maximale d'une animation, la fin de l'animation n'est pas atteinte simultanément, on conclut à un déroulement erroné de l'animation et l'alimentation en courant est interrompue.

11. Projecteur de véhicule selon l'une des revendications précédentes, dans lequel les sources lumineuses (2a) sont des sources lumineuses à semi-conducteurs, en particulier des sources lumineuses à LED (2a).

12. Véhicule, notamment automobile, comprenant un projecteur de véhicule selon l'une des revendications précédentes.
